# EUROPEAN PATENT APPLICATION

(11) **EP 2 461 241 A1**
(43) Date of publication of application: **06.06.2012**
(21) Application number: 10193604.5
(22) Date of filing: 03.12.2010
(51) Int. Cl.: G06F 3/048

(54) **Soft key with main function and logically related sub-functions for touch screen device**

(71) Applicant: Research In Motion Limited, Waterloo, ON N2L 3W8 (CA)
(72) Inventor: Griffin, Jason Tyler, Waterloo, Ontario N2L 3W8 (CA)
(74) Representative: Moore, Barry

(57) **Abstract**

A portable electronic device that has a touch-sensitive display with one or more soft keys. Each soft key has associated thereto a main function with a default input parameter and one or more sub-functions. Each sub-function is an instance of the main function but with a modified input parameter. Each sub-function can be launched by performing two or more actions on the touch-sensitive display. One of the action is to be performed on the soft key itself. The function and the sub-function serve to process displayed content.

## Description

The present disclosure relates generally to portable electronic devices, including, but not limited to, portable electronic devices having touch-sensitive displays and their control.

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth^{™} capabilities.

Portable electronic devices such as PDAs or smart telephones are generally intended for handheld use and ease of portability. Smaller devices are generally desirable for portability. A touch-sensitive display, also known as a touch screen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in devices with touch-sensitive displays are desirable.

### GENERAL

The following generally describes a portable electronic device that may have soft keys shown on a touch-sensitive display. Each soft key can have associated thereto a main function that can be launched upon the soft key being subjected to an action such as a touch. The soft key may also have associated thereto one or more sub-functions that are logically related to the main function. Each sub-function can be launched upon a first action and a second action being detected on the soft key.

In a first aspect, the present disclosure may provide a method of operating a portable electronic device having a memory with content stored therein and a touch-sensitive display. The touch-sensitive display may be arranged to display a soft key. The soft-key may have associated thereto a function with a default input parameter; the soft-key further has associated thereto one or more sub-functions, each sub-function corresponding to an instance of the function with a modified input parameter. The function and each of the sub-functions may be to process displayed content, displayed content being content displayed on the touch-sensitive display. The method may comprise: detecting a first action and a second action on the touch-sensitive display, one of the first action and the section action being detected at the soft-key, the first action and the second action to select one of the one or more sub-functions to obtain a selected sub-function; and performing the selected sub-function.

In a second aspect, the present disclosure may provide a portable electronic device that comprises: a memory having content stored therein; a touch-sensitive display having a soft-key, the soft-key having associated thereto a function with a default input parameter, the soft-key further having associated thereto one or more sub-functions, each sub-function corresponding to an instance of the function with a modified input parameter, the function and each of the sub-functions to process displayed content, displayed content being content displayed on the touch-sensitive display; and a processor operationally connected to the touch-sensitive display and to the memory, the memory storing statements and instructions for execution by the processor to carry out a method. The method may comprise: detecting a first action and a second action on the touch-sensitive display, one of the first action and the section action being detected at the soft-key, the first action and the second action to select one of the one or more sub-functions to obtain a selected sub-function; and performing the selected sub-function.

In a third aspect, the present disclosure may provide a tangible computer-readable medium having recorded thereon statements and instructions for execution by a processor of a portable electronic device to perform a method of operating the portable electronic device. The portable electronic device has a memory with content stored therein and a touch-sensitive display. The memory and the touch-sensitive display may be operationally connected to the processor. The touch-sensitive display may be arranged to display a soft key. The soft-key may have associated thereto a function with a default input parameter. The soft-key further may have associated thereto one or more sub-functions. Each sub-function may correspond to an instance of the function with a modified input parameter. The function and each of the sub-functions may be to process displayed content, displayed content being content displayed on the touch-sensitive display. The method may comprise: detecting a first action and a second action on the touch-sensitive display, one of the first action and the section action being detected at the soft-key, the first action and the second action to select one of the one or more sub-functions to obtain a selected sub-function; and performing the selected sub-function.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a mobile wireless communication device, which can also be refereed to, for example, as a mobile device, a mobile electronic device, a portable device, and a portable electronic device. Examples of applicable mobile devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

### BRIEF DESCRIPTION OF THE DRAWINGS

Embodiments of the present disclosure will now be described, by way of example only, with reference to the attached Figures.
Figure 1 shows a block diagram of a portable electronic device in accordance with the disclosure.
Figure 2 shows a front view of an example of a portable electronic device in accordance with the disclosure.
Figure 3 shows a rotation dial that can be shown on of a portable electronic device in accordance with the disclosure.
Figure 4 shows a front view of another example of a portable electronic device in accordance with the disclosure.
Figure 5 shows a flow chart of a method in accordance with the disclosure.

### DETAILED DESCRIPTION

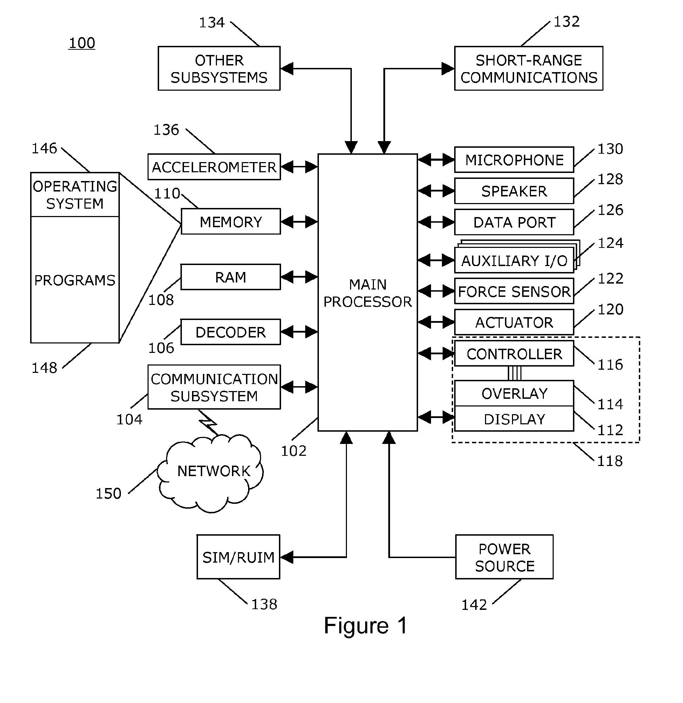

A block diagram of an example of a portable electronic device 100 is shown in Figure 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from, and sends messages to, a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

The touch-sensitive display 118 is operationally connected to the one or more force sensors 122 and to the one or more actuators 120. Upon the touch-sensitive display 118 being depressed, the one or more force sensors 122 detect a force and provide a force signal to the main processor 102. In turn, the main processor 102 can actuate the one or more actuators 120 to provide a tactile feedback (haptic feedback) to the user. In one example, the one or more actuators can include a piezo-electric assembly physically connected to the touch-sensitive display 118. Upon being actuated, the piezo-electric assembly will vibrate, thereby making the touch-sensitive display 118 vibrate to provide the tactile feedback to the user. The one or more force sensors 122, the one or more actuators, and the touch-sensitive display 118 can be arranged in the portable electronic device 100 such that the touch-sensitive display 118 has a displacement range. That is, the touch-sensitive display 118 can be mounted in the portable electronic device 100 to be movable with respect to a housing of the portable electronic device within a displacement range. As an example, the touch-sensitive display 118 can have a 50µm displacement range. An example of such an assembly is shown in U.S. Patent Application Publication No. 20100156843, published June 24, 2010.

The one or more force sensors 122 and the main processor 102 can perform as a switch, or switch mechanism, in that the force signal provided by the one or more force sensors 122 to the main processor 102, upon the touch-sensitive display 118 being subjected to a force (being depressed), can be used by the main processor 102 to control any of the components operationally connected thereto, or to launch (perform) any function (or sub-function) programmed in the portable electronic device 100. In other embodiments, the portable electronic device can have a touch-sensitive display 118 that is mechanically and operationally connected to one or more dome-type switches, that are electrically connected to a main processor. An example of such a switch mechanism is shown in U.S. Patent Application Publication No. 2010/0110016, published May 6, 2010.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more actions may be detected on the touch-sensitive display 118 and on a soft key displayed on the touch-sensitive display 118. Such actions may include: a touch - for example, a user of the mobile electronic device touches the touch-sensitive display 118; a tap - for example, the user touches the touch-sensitive display 118 with a finger and subsequently removes the finger (lifts the finger) from the touch-sensitive display; a stroke - for example, the user touches the touch-sensitive display 118 with a finger and moves the finger across a portion of the touch-sensitive display 118; a gesture - for example, the user touches the touch-sensitive display 118 with a finger and moves the finger in a pattern on a portion of the touch-sensitive display 118 before lifting the finger off the touch-sensitive display (the pattern may be any suitable geometric figure such as, for example, a circle arc); a depression of the touch-sensitive display 118; and, a depression and release of the touch-sensitive display 118. Any action that includes any type of contact with the touch-sensitive display 118, or any type of contact and release of contact with the touch-sensitive display is within the scope of the present disclosure.

The present disclosure applies to portable electronic devices that have a touch-sensitive display that can be moved with respect to their housing upon being depressed (i.e., upon a user pushing against the touch-sensitive display), and that are operationally connected to a switch mechanism, such as described, for example, in the embodiments described in above-noted U.S. Patent Application No. 20100156843 and U.S. Patent Application Publication No. 2010/0110016.

The present disclosure also applies to portable electronic devices that have a touch-sensitive display that cannot be moved with respect to their housing upon being subjected to a force applied substantially perpendicularly to the surface of the touch-sensitive display to activate a switch mechanism. As an example, portable electronic devices that have a touch-sensitive display that is fixedly secured to the housing of their portable electronic device are within the scope of the present disclosure, as are portable electronic devices that have a touch-sensitive display that can be slid with respect to a base portion of the device but that cannot be depressed upon being subjected to a force applied substantially perpendicularly to the surface of the touch-sensitive display to activate a switch mechanism.

The processor 102 may determine attributes of the action, including a location of the action. Action location data may include an area of contact (e.g., an area defining a soft key) or a single point of contact, such as a point at or near a center of the area of contact. The location of a detected action may include coordinates with, for example, x and y coordinates, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of an action. An action may be detected from any suitable object, such as a finger, thumb, or other items, for example, a stylus, pen, or other pointer, depending on the nature of the touch-sensitive display 118. Multiple simultaneous actions or sequential actions may be detected.

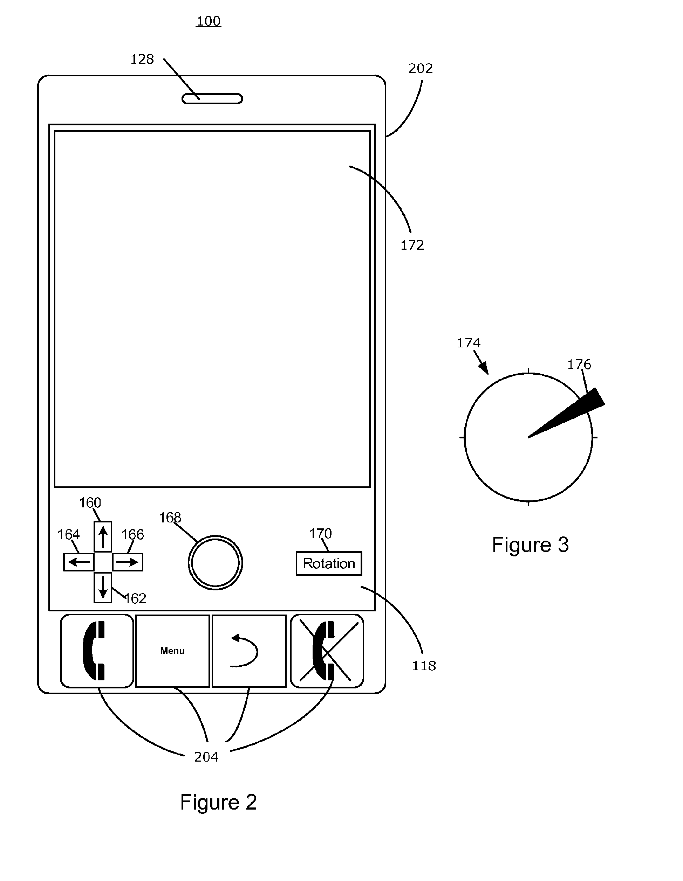

A front view of a portable electronic device 100 having a touch-sensitive display 118 is shown in Figure 2. A housing 202, the speaker 128, and various physical buttons or keys 204 are also shown. Additionally, soft keys such as, for example, the up-arrow key 160, the down-arrow key 162, the left-arrow key 164, the right-arrow key 166, the virtual trackball key 168, and the rotation key 170 can be displayed on the touch-sensitive display 118. The up-arrow key 160, the down-arrow key 162, the left-arrow key 164, the right-arrow key 166, and the virtual trackball key 168 can be used to navigate through a document displayed in a display portion 172 of the touch-sensitive display. The document can be, for example, a text document, or a picture document. The rotation key 170 can be used to rotate the document displayed in the display portion 172. Soft keys can also be referred to as virtual keys. Although the keys 204 are shown separate from the touch-sensitive display, the keys 204 may alternatively be soft keys displayed on the touch-sensitive display 118. The present disclosure may be applied to other touch-sensitive input devices, such as touch pads with tactile or without tactile feedback.

The present disclosure provides soft keys on a touch-sensitive display with the soft keys having associated thereto a main function and one or more sub-functions logically related to the main function. Logically related is to be understood as meaning that the sub-function is substantially the same function as the main function but with an input parameter (or parameters) different than a default input parameter of the main function.

As described in the following examples, the main function can have a default input parameter. As described below, the sub-functions can correspond to the main function but with a modified input parameter. The main function can be launched by a single action on the touch-sensitive display 118, for example by an action on the soft key itself, and the sub-functions can be launched through two or more actions on the touch-sensitive display 118. For example, a sub-function could be launched though two or more actions on the touch-sensitive display 118 with one of the two or more actions being on the soft key itself.

In the following examples, text documents, picture documents (pictures), message documents (messages), network links, calendar items, keyboard items, media items (video, audio), voice message items, and any other suitable type of items, can each be referred to as content that can be stored in the memory 110 and that can be displayed or listed on the touch-sensitive display 118.

For example, the exemplary up-arrow key 160 can have associated thereto a scroll up function (main function) that scrolls up in the document being displayed in the display portion 172, by a pre-determined value, for example, a single text line in the display portion 172, every time the up-arrow key 160 undergoes a single action (e.g., a touch). The up-arrow key 160 can also have associated thereto sub-functions that also scroll-up but by values different than that of a single text line in the display portion 172 associated with the main function. For example, with the first action being a stoke on the soft key 160 and the second action being a touch on the soft key 160, a sub-function to scroll-up by a full document page can be launched. In another example, with the first action being a stroke on the soft key 160 and the second action being a tap on the soft key 160, a scroll to top of document sub-function can be launched.

In the up-arrow key example, the main function associated with the up-arrow key 160 can be represented as Scroll_up(single_text_line), with single_text_line being the default input parameter of the Scroll_up() function. The sub-function launched by a touch action followed by a stroke action can be represented as Scroll_up(full_document_page), with full_document_page being the modified input parameter of the Scroll_up() function. Additionally, the sub-function launched by a stroke action followed by a tap action can be represented as Scroll_up(top_of_document), with top_of_document being the modified input parameter to the Scroll_up() function.

As another example, the exemplary left-arrow key 164 can have associated thereto a scroll left function (main function) that scrolls left in the document being displayed in the display portion 172, by a pre-determined value, for example, a pre-determined number of pixels in the display portion 172, every time the left-arrow key 164 undergoes a single action (e.g., a touch). The left-arrow key 164 can also have associated thereto sub-functions that also scroll left but by values different than the pre-determined number of pixels in the display portion 172 associated with the main function. As an example, with the first action being a stroke on the soft key 164 and the second action being a touch on the soft key 164, a sub-function to scroll left by a full display portion width can be launched. In another example, with the first action being a stroke on the soft key 164 and the second action being a tap on the soft key 164, a scroll to the leftmost portion of the document sub-function can be launched.

In the left-arrow key example, the main function associated with the left-arrow key 164 can be represented as Scroll_left(pre-determined_number_of_pixels), with pre-determined_number_of_pixels being the default input parameter of the Scroll_left() function. The sub-function launched by a stroke action followed by a touch action can be represented as Scroll_left(full_display_width), with full_display_width being the modified input parameter of the Scroll_left() function. Additionally, the sub-function launched by a stroke action followed by a tap action can be represented as Scroll_left(leftmost_portion), with leftmost_portion being the modified input parameter of the Scroll_left() function. Therefore, the up-arrow key 160 and the left-arrow key 164, with their main function and corresponding sub-functions, allow the user to modify a view of the document displayed (displayed content) on the touch-sensitive display. As will be understood by the skilled worker the right-arrow key 166 and the bottom-arrow key 162 can have associated thereto functions and sub-functions similar to those described in relation to the up-arrow key 160 and the left-arrow key 164.

The above examples regarding up-arrow key 160 and left-arrow key 164 were described with touch, tap, and stroke actions being used to launch a main function or a sub-function; however, as will be understood by the skilled worker, any other suitable actions can be used without departing from the scope of the present disclosure.

In some embodiments, the first of two actions to launch a sub-function can be the same as the single action required to launch the main function. For example, the sub-function in question could be launched by a first action combined with a second action, with the first action being the same as the single action to launch the main function, provided the second action is detected within a pre-determined time interval subsequent the first action being detected.

As another example, the virtual trackball key 168 can have associated thereto a main function that scrolls the document displayed in the display portion 172 in a direction related to the direction of a stroke on the virtual trackball key 168, by a displacement distance of the document (scrolling distance) related to a length of the stroke on the virtual trackball key 168. For example, the main function associated to the virtual trackball key 168 can be launched by a stroke action on the virtual trackball key 168 and the main function can be to scroll the document in substantially the same direction as the direction of a stroke on the virtual trackball key 168, with the displacement distance of the document (scrolling distance) being a pre-determined factor of the length of the stroke on the virtual trackball key 168. In this example, the main function associated with the virtual trackball key 168 can be represented as Trackball(direction_of_stroke, length_of_stroke) with direction_of_stroke and length_of_stroke being default input parameters of the Trackball() function.

The virtual trackball key 168 can also have associated thereto one or more sub-functions that can, for example, also scroll the document displayed in the display portion 172 in the direction of a stroke on the virtual trackball key 168 but by a document displacement distance that is not directly related to the length of the stroke on the virtual trackball key 168.

For example, a sub-function of the virtual trackball key 168 may be to scroll the document to a boundary of the document upon detecting, as a first action, a tap on the virtual trackball key 168 and, as a second action, a stroke on the touch-sensitive display 118. If the stroke is in the downwards direction, the document displayed in the display portion 172 would be scrolled to display the bottom of the document. If the stroke is in the upwards direction, the document would be scrolled to display the top of the document. If the stroke is in the right direction, the document would be scrolled to display the rightmost portion of the document. If the stroke is in the left direction, the document would be scrolled to display the leftmost portion of the document. In this example, the sub-function can be represented as Trackball(direction_of_stroke, distance_to_boundary_of_document_in_stroke_direction), with distance_to_boundary_of_document_in_stroke_direction being a modified input parameter of the Trackball() function. In the present example, the modified input parameter can be obtained by the processor calculating the distance to the boundary of the document, in the direction of the stroke action. Therefore, the virtual trackball key 168, its main function and the associated sub-functions, allow the user to modify a view of the document displayed (displayed content) on the touch-sensitive display.

Event though the above-noted examples regarding the up-arrow key 160, the left-arrow key 164 (as well as the right-arrow key 166 and the bottom arrow key 162) and the virtual trackball key 168 are described in terms of a document (e.g., a text document, photograph document), they can also be used in other application such as, for example, browser applications to navigate through items displayed in the browser, calendar applications to navigate through calendar items by calendar time intervals (e.g., year, month, week, day), and media applications to navigate through media items (e.g., audio items, video items). Therefore, the top-arrow key 160, the left-arrow key 164 (as well as the right-arrow key 166 and the bottom arrow key 162) and the virtual trackball key 168, and their associated function and sub-functions, can allow the user of the portable electronic device 100 to navigate through data items such as data items in a browser displayed on the touch-sensitive display 118. The navigation through data items can be described in terms of step size, the step size can be the number of items between a selected data item (e.g., a highlighted data item) and another data item. The main function can have a default step size parameter (e.g., 1 item), each sub-function can have associated thereto a modified step size parameter (e.g., 2 items, top item, bottom item etc.)

In another example, the rotation key 170 can have associated thereto a main function that rotates a document displayed in the display portion 172, through a pre-determined angle, in a pre-determined direction, each time the rotation key 170 is subjected to an action (e.g., a touch). For example, the main function associated to the rotation key can be a 90° rotation in the counter clockwise direction. This exemplary main function can be represented as Rotation(90°, counter_clockwise), with 90° and counter_clockwise being default input parameters of the Rotation() function.

The rotation key 170 can also have associated thereto one or more sub-functions that can, for example, rotate the document displayed in the display region 172 by an angle and in a direction other than the default angle (90°) and the default direction (counter clockwise) associated with the main function of the rotation key 170.

For example, a sub-function of the Rotation() function can be to rotate the document displayed in the display region 172 by an angle of 90° but in the clockwise direction, upon detecting, as a first action, a stroke on the rotation key 170 and, as a second action, a touch on the rotation key 170. In this example, the sub-function can be represented as Rotation(90°, clockwise), with clockwise being a modified input parameter of the Rotation() function.

As a further example, another sub-function of the Rotation() function can be to rotate the document displayed in the display region 170 through 180° upon detecting, as a first action, a depression of the rotation key 170 and of the touch-sensitive display 118 and, as a second action, a touch on the rotation key 170. In this example, the sub-function can be represented as Rotation(180°, counter_clockwise), with 180° being a modified input parameter of the Rotation() function.

As an additional example, another sub-function of the Rotation() function can be to display a rotation dial that can be rotated, by the user of the portable electronic device 100, to rotate the document displayed on the display portion 170 by an angle commensurate with the angle through which the rotation dial is rotated. An exemplary rotation dial 174 having a rotatable angle selector 176 is shown at Figure 3. The rotation dial can be displayed in lieu of the rotation button 170 or adjacent the rotation button 170.

In this example, the rotation function can be represented as Rotation(angle_from_rotation_dial, direction_from_rotation_dial), with angle_from_rotation_dial and direction_from_rotation_dial being modified input parameters for the Rotation() function.

Therefore, the rotation key 170, its main function, and the associated sub-functions, allow the user to modify a view of the document displayed (displayed content) on the touch-sensitive display.

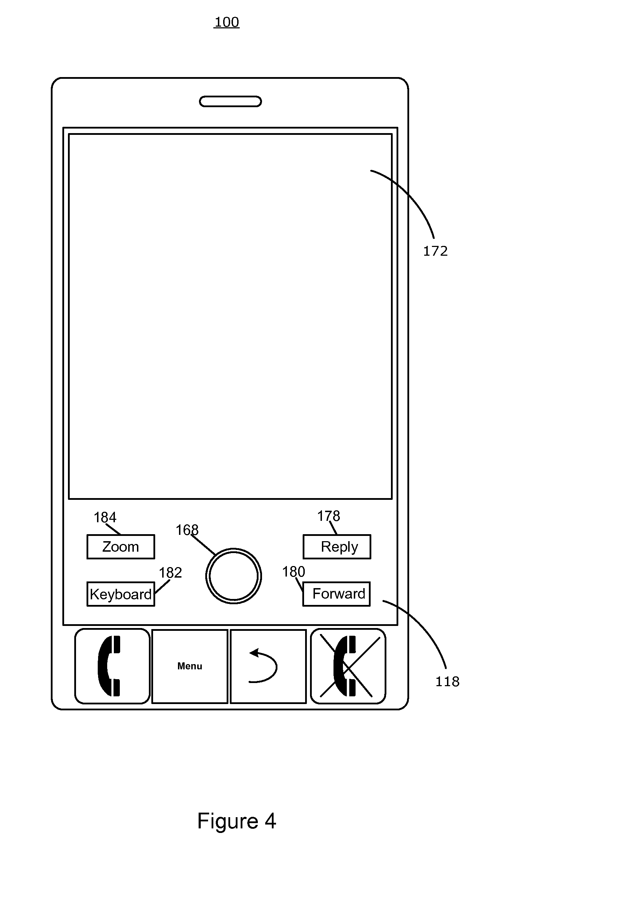

Figure 4 shows a front view of the portable electronic device 100 but with soft keys different than those shown at Figure 2. Figure 4 shows examples of soft keys that may be associated with a mail or messaging application running on the portable electronic device 100. These soft keys include the virtual trackball key 168 of Figure 2, which can be used to navigate through a list of messages (data items) displayed on the display portion 172 or to navigate within a message displayed on the display portion 172. Additionally, Figure 4 shows a reply key 178, a forward key 180.

The reply key 178 can have associated thereto a main function that serves to reply to the sender of a selected message upon the reply key 178 being subjected to an action (e.g., a touch). The main function associated with the reply key 178 can be represented as Reply_to(sender) with sender being the default input parameter of the Reply_to(function).

The reply key 178 can also have associated thereto, for example, a sub-function that can reply to all addressees of the selected message upon detecting, as a first action, a stroke on the reply key 178, and, as a second action, a touch on the reply key 178. In this example, the sub-function can be represented as Reply_to(all) with all (all addressees) being the modified input parameter of the Reply_to() function. Therefore, the reply key 178, its main function, and the associated sub-function, allow the user to transfer data items stored in the memory 110 and displayed on the touch-sensitive display 118 (e.g., a composed reply message) to third parties. That is, the reply key 178, its main function, and the associated sub-function, allow the user to transfer displayed content to third parties

The forward key 180 can have associated thereto a main function that serves to forward the selected message to a third party upon the forward key 180 being subjected to an action (e.g., a touch). The main function associated with the forward key 180 can be represented as Forward_to(enter_contact) with enter_contact being the default input parameter of the Forward_to() function. Upon selecting this main function, the user is prompted to enter the contact address or addresses to which he wishes to forward the message.

The forward key 180 can also have associated thereto, for example, a sub-function that can forward the selected message as a message of any suitable type upon detecting, as a first action, a depression of the forward key 180 and of the touch-sensitive display 118, and, as a second action, a touch on the forward key 180. Exemplary message types include an email message, a PIN message, an SMS message, or an MMS message. In the present example, the sub-function can be represented as Forward_to(enter_contact, enter_message_type) with enter_message_type being a modified input parameter of the Forward_to() function. Therefore, the forward key 180, its main function and associated sub-function, allow the user to transfer data items stored in memory and displayed on the touch-sensitive display 118 (e.g., a received message) to third parties. That is, the forward key 180, its main function and associated sub-function, allow the user to transfer displayed content to third parties.

Another soft key that may be displayed on the touch-sensitive display 118 is a keyboard selection key 182, shown at Figure 4. The keyboard selection key 182 can have associated thereto a main function to display a keyboard on the touch-sensitive display 118. The keyboard can be, for example, a numeric keyboard, a Latin alphabet keyboard, a symbol keyboard, a Hebrew alphabet keyboard, etc. As an example, the main function can be such that the last previous keyboard that was displayed is again displayed upon the keyboard selection key 182 being subjected to an action (e.g., a touch). In this example, the main function can be represented as Display_keyboard(last) with last being the default input parameter of the Display_keyboard() function. Alternatively, the keyboard select key 182 can have associated thereto a main function that cycles through, one by one, a series of available keyboards each time a first action (e.g., a touch) is detected on the keyboard select key 182.

The keyboard selection key 182 can also have associated thereto, for example, a sub-function that can select an available keyboard upon detecting a pre-determined pair of first and second actions. For example, the numeric keyboard could be selected by detecting, as a first action, a stroke on the keyboard selection key 182, and, as a second action, a touch on the keyboard selection key 182. As another example, the symbol keyboard could be selected by detecting, as a first action, a stroke on keyboard selection key 182, and, as a second action, a depression of the keyboard selection key 182. In this example, the sub-function can be represented as Display_keyboard(action_1, action_2), with action_1 and action_2 being modified input parameters of the Display_keyboard() function.

As such, the keyboard selection key 182, its main function, and its associated sub-functions, allow the user to navigate through and select data items, the data items being, in the present example, different soft keyboards, stored in memory and displayable on the touch-sensitive display 118. That is, the keyboard selection key 182, its main function, and its associated sub-functions, allow the user to navigate through and select displayed content.

Figure 4 also shows a zoom key 184 formed on the touch-sensitive display 118.

The zoom key 184 can also have associated thereto a main function that zooms in, or out of, a document displayed in the display portion 172, by a pre-determined factor, each time the zoom key 184 is subjected to an action (e.g., a touch). For example, the main function associated to the zoom key 184 can be a +50% magnification of the displayed document. This exemplary main function can be represented as Zoom(+50%), with +50% being the default input parameters of the Zoom() function.

The zoom key 184 can also have associated thereto one or more sub-functions that can, for example, zoom in, or out of, the document displayed in the display region 172 by a factor other than +50%. For example, a sub-function of the Zoom() function can be to zoom in the document displayed in the display region 172 by +100% upon detecting, as a first action, a stroke on the zoom key 184 and, as a second action, a touch on the zoom key 184. In this example, the sub-function can be represented as Zoom(+100%), with +100% being a modified input parameter of the Zoom() function. Therefore, the zoom key 184, its main function and the associated sub-functions, allow the user to modify a view of the document displayed (displayed content) on the touch-sensitive display.

In the above examples, the first action and the second action were both described as being detected on a soft key. However, this need not be the case. For example, in some cases, only one of the first action and the second action may need to be detected on the soft key itself while the other of the first action and the second action may be detected elsewhere on the touch-sensitive display, outside the soft key in question.

As stated above, the present disclosure provides soft keys on a touch-sensitive display with the soft keys having associated thereto a main function and one or more sub-functions logically related to the main function. Logically related is to be understood as meaning that the sub-function is substantially the same function as the main function but with an input parameter (or parameters) different than a default input parameter of the main function.

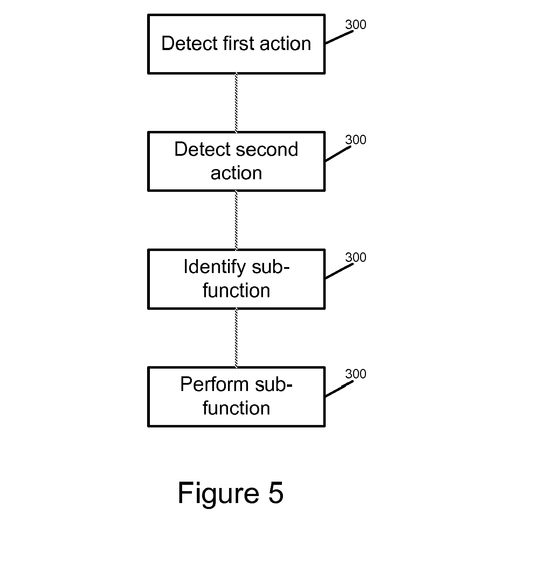

Figure 5 shows an exemplary method of the present disclosure. At item 300, a first action is detected and at item 302, a second action is detected. The first action and the second action can both be detected on a soft key formed on the touch-sensitive display 118. Alternatively, only one of the first action and the second action need to be detected on the soft key. The other of the first action and the second action can be detected elsewhere on the touch-sensitive display 118, outside the soft key. At item 304, a sub-function is identified (selected) in accordance with, that is, as a function of, the first detected action and the second detected action. At item 306, the identified sub-function is performed (launched).

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A method of operating a portable electronic device having a memory with content stored therein and a touch-sensitive display, the touch-sensitive display arranged to display a soft key, the soft-key having associated thereto a function with a default input parameter, the soft-key further having associated thereto one or more sub-functions, each sub-function corresponding to an instance of the function with a modified input parameter, the function and each of the sub-functions to process displayed content, displayed content being content displayed on the touch-sensitive display, the method comprising:
detecting a first action and a second action on the touch-sensitive display, one of
the first action and the section action being detected at the soft-key, the first action and the second action to select one of the one or more sub-functions to obtain a selected sub-function;
and
performing the selected sub-function.

2. The method of claim 1 wherein the content comprises at least one of a text document, a picture document, a message document, a network link, a calendar item, a keyboard item, and a media item.

3. The method of claim 1 or claim 2 wherein:
the portable electronic device can communicate with a third party; and
to process displayed content comprises at least one of: to modify a view of the
displayed content, to navigate through the displayed content, and to transfer the displayed content to the third party.

4. The method of any preceding claim wherein the portable electronic device further has a switch mechanism, the switch mechanism being operationally connected to the touch-sensitive display, the first action, the second action or both the first action and the second being one of:
a depression of the touch-sensitive display to actuate the switch mechanism;
a depression and release of the touch-sensitive display to actuate the switch
mechanism;
a touch on the touch-sensitive display;
a stroke on the touch-sensitive display;
a gesture on the touch-sensitive display; and
a maintaining of a depression of the touch-sensitive display for a pre-determined
period of time.

5. The method of claim 3 wherein to modify a view of the displayed content includes scrolling though the displayed content, the function being to scroll through the displayed content by a pre-determined distance, the one or more sub-functions being to scroll through the displayed content by a distance determined in accordance with the first action and the second action.

6. A portable electronic device comprising:
a memory having content stored therein;
a touch-sensitive display having a soft-key, the soft-key having associated thereto
a function with a default input parameter, the soft-key further having associated thereto one or more sub-functions, each sub-function corresponding to an instance of the function with a modified input parameter, the function and each of the sub-functions to process displayed content, displayed content being content displayed on the touch-sensitive display; and
a processor operationally connected to the touch-sensitive display and to the
memory, the memory storing statements and instructions for execution by the processor to carry out a method of:
detecting a first action and a second action on the touch-sensitive display,
one of the first action and the section action being detected at the soft-key, the first action and the second action to select one of the one or more sub-functions to obtain a selected sub-function;
and
performing the selected sub-function.

7. The portable electronic device of claim 6 wherein the content comprises at least one of a text document, a picture document, a message document, a network link, a calendar item, a keyboard item, and a media item.

8. The portable electronic device of claim 6 or claim 7 wherein:
the portable electronic device can communicate with a third party; and
to process displayed content comprises at least one of: to modify a view of the
displayed content, to navigate through the displayed content, and to transfer the displayed content to the third party.

9. The portable electronic device of any one of claims 6 to 8 further comprising a switch mechanism, the switch mechanism being operationally connected to the touch-sensitive display and to the processor, the first action, the second action or both the first action and the second being one of:
a depression of the touch-sensitive display to actuate the switch mechanism;
a depression and release of the touch-sensitive display to actuate the switch
mechanism;
a touch on the touch-sensitive display;
a stroke on the touch-sensitive display;
a gesture on the touch-sensitive display; and
a maintaining of a depression of the touch-sensitive display for a pre-determined
period of time.

10. The portable electronic device of claim 8 wherein to modify a view of the displayed content includes scrolling though the displayed content, the function being to scroll through the displayed content by a pre-determined distance, the one or more sub-functions being to scroll through the displayed content by a distance determined in accordance with the first action and the second action.

11. A computer-readable medium having recorded thereon statements and instructions for execution by a processor of a portable electronic device to perform a method of operating the portable electronic device, the portable electronic device having a memory with content stored therein and a touch-sensitive display, the memory and the touch-sensitive display being operationally connected to the processor, the touch-sensitive display arranged to display a soft key, the soft-key having associated thereto a function with a default input parameter, the soft-key further having associated thereto one or more sub-functions, each sub-function corresponding to an instance of the function with a modified input parameter, the function and each of the sub-functions to process displayed content, displayed content being content displayed on the touch-sensitive display, the method comprising:
detecting a first action and a second action on the touch-sensitive display, one of
the first action and the section action being detected at the soft-key, the first action and the second action to select one of the one or more sub-functions to obtain a selected sub-function;
and
performing the selected sub-function.

12. The computer-readable medium of claim 11 wherein the content comprises at least one of a text document, a picture document, a message document, a network link, a calendar item, a keyboard item, and a media item.

13. The computer-readable medium of claim 11 or claim 12 wherein:
the portable electronic device can communicate with a third party; and
to process displayed content comprises at least one of: to modify a view of the
displayed content, to navigate through the displayed content, and to transfer the displayed content to the third party.

14. The computer-readable medium of any one of claims 11 to 13 wherein the portable electronic device further has a switch mechanism, the switch mechanism being operationally connected to the touch-sensitive display and to the processor, the first action, the second action or both the first action and the second being one of:
a depression of the touch-sensitive display to actuate the switch mechanism;
a depression and release of the touch-sensitive display to actuate the switch
mechanism;
a touch on the touch-sensitive display;
a stroke on the touch-sensitive display;
a gesture on the touch-sensitive display; and
a maintaining of a depression of the touch-sensitive display for a pre-determined
period of time.

15. The tangible computer-readable medium of claim 13 wherein to modify a view of the displayed content includes scrolling though the displayed content, the function being to scroll through the displayed content by a pre-determined distance, the one or more sub-functions being to scroll through the displayed content by a distance determined in accordance with the first action and the second action.

## Amended claims

### Amended claims in accordance with Rule 137(2) EPC.

**1.** A method of operating a portable electronic device (100) having a memory (110) with content stored therein and a touch-sensitive display (118), the touch-sensitive display (118) arranged to display a soft key (160, 162, 164, 166, 168, 170), the soft-key (160, 162, 164, 166, 168, 170) having associated thereto a function with a default input parameter, the soft-key (160, 162, 164, 166, 168, 170)further having associated thereto one or more sub-functions, each sub-function corresponding to an instance of the function with a modified input parameter, the function and each of the sub-functions to process displayed content, displayed content being content displayed on the touch-sensitive display (118), the method comprising:
detecting a first action (300) and a second action (302) on the touch-sensitive display (118), one of the first action and the second action being detected at the soft-key (160, 162, 164, 166, 168, 170), the first action and the second action to select one of the one or more sub-functions to obtain a selected sub-function (304);
and
performing (306) the selected sub-function.

**2.** The method of claim 1 wherein the content comprises at least one of a text document, a picture document, a message document, a network link, a calendar item, a keyboard item, and a media item.

**3.** The method of claim 1 or claim 2 wherein:
the portable electronic device (100) can communicate with a third party; and
to process displayed content comprises at least one of: to modify a view of the displayed content, to navigate through the displayed content, and to transfer the displayed content to the third party.

**4.** The method of any preceding claim wherein the portable electronic device (100) further has a switch mechanism (102, 122), the switch mechanism (102, 122) being operationally connected to the touch-sensitive display (118), the first action, the second action or both the first action and the second being one of:
a depression of the touch-sensitive display (118) to actuate the switch mechanism (102, 122);
a depression and release of the touch-sensitive display (118) to actuate the switch mechanism (102, 122);
a touch on the touch-sensitive display (118);
a stroke on the touch-sensitive display (118);
a gesture on the touch-sensitive display (118); and
a maintaining of a depression of the touch-sensitive display (118) for a pre-determined period of time.

**5.** The method of claim 3 wherein to modify a view of the displayed content includes scrolling through the displayed content, the function being to scroll through the displayed content by a pre-determined distance, the one or more sub-functions being to scroll through the displayed content by a distance determined in accordance with the first action and the second action.

**6.** A portable electronic device (100) comprising:
a memory (110) having content stored therein;
a touch-sensitive display (118) having a soft-key (160, 162, 164, 166, 168, 170), the soft-key (160, 162, 164, 166, 168, 170) having associated thereto a function with a default input parameter, the soft-key (160, 162, 164, 166, 168, 170) further having associated thereto one or more sub-functions, each sub-function corresponding to an instance of the function with a modified input parameter, the function and each of the sub-functions to process displayed content, displayed content being content displayed on the touch-sensitive display (118);
and
a processor (102) operationally connected to the touch-sensitive display (118) and to the memory (110), the memory (110) storing statements and instructions for execution by the processor (102) to carry out a method of:
detecting a first action (300) and a second action (302)on the touch-sensitive display (118), one of the first action and the second action being detected at the soft-key (160, 162, 164, 166, 168, 170), the first action and the second action to select one of the one or more sub-functions to obtain a selected sub-function (304);
and
performing (306) the selected sub-function.

**7.** The portable electronic device (100) of claim 6 wherein the content comprises at least one of a text document, a picture document, a message document, a network link, a calendar item, a keyboard item, and a media item.

**8.** The portable electronic device (100) of claim 6 or claim 7 wherein:
the portable electronic device (100) can communicate with a third party; and
to process displayed content comprises at least one of: to modify a view of the displayed content, to navigate through the displayed content, and to transfer the displayed content to the third party.

**9.** The portable electronic device (100) of any one of claims 6 to 8 further comprising a switch mechanism (102, 122), the switch mechanism (102, 122) being operationally connected to the touch-sensitive display (118) and to the processor (102), the first action, the second action or both the first action and the second being one of:
a depression of the touch-sensitive display (118) to actuate the switch mechanism (102, 122);
a depression and release of the touch-sensitive display (118) to actuate the switch mechanism (102, 122);
a touch on the touch-sensitive display (118);
a stroke on the touch-sensitive display (118);
a gesture on the touch-sensitive display (118); and
a maintaining of a depression of the touch-sensitive display (118) for a pre-determined period of time.

**10.** The portable electronic device (100) of claim 8 wherein to modify a view of the displayed content includes scrolling through the displayed content, the function being to scroll through the displayed content by a pre-determined distance, the one or more sub-functions being to scroll through the displayed content by a distance determined in accordance with the first action and the second action.

**11.** A computer-readable medium having recorded thereon statements and instructions for execution by a processor (102) of a portable electronic device (100) to perform a method of operating the portable electronic device (100), the portable electronic device (100) having a memory (110) with content stored therein and a touch-sensitive display (118), the memory (110) and the touch-sensitive display (118) being operationally connected to the processor (102), the touch-sensitive display (118) arranged to display a soft key (160, 162, 164, 166, 168, 170), the soft-key (160, 162, 164, 166, 168, 170) having associated thereto a function with a default input parameter, the soft-key (160, 162, 164, 166, 168, 170) further having associated thereto one or more sub-functions, each sub-function corresponding to an instance of the function with a modified input parameter, the function and each of the sub-functions to process displayed content, displayed content being content displayed on the touch-sensitive display (118), the method comprising:
detecting a first action (300) and a second action (302) on the touch-sensitive display (118), one of the first action and the second action being detected at the soft-key (160, 162, 164, 166, 168, 170), the first action and the second action to select one of the one or more sub-functions to obtain a selected sub-function (304);
and
performing (306) the selected sub-function.

**12.** The computer-readable medium of claim 11 wherein the content comprises at least one of a text document, a picture document, a message document, a network link, a calendar item, a keyboard item, and a media item.

**13.** The computer-readable medium of claim 11 or claim 12 wherein:
the portable electronic device (100) can communicate with a third party; and
to process displayed content comprises at least one of: to modify a view of the displayed content, to navigate through the displayed content, and to transfer the displayed content to the third party.

**14.** The computer-readable medium of any one of claims 11 to 13 wherein the portable electronic device (100) further has a switch mechanism (102, 122), the switch mechanism (102, 122) being operationally connected to the touch-sensitive display (118) and to the processor (102), the first action, the second action or both the first action and the second being one of:
a depression of the touch-sensitive display (118) to actuate the switch mechanism (102, 122);
a depression and release of the touch-sensitive display (118) to actuate the switch mechanism (102, 122);
a touch on the touch-sensitive display (118);
a stroke on the touch-sensitive display (118);
a gesture on the touch-sensitive display (118); and
a maintaining of a depression of the touch-sensitive display (118) for a pre-determined period of time.

**15.** The tangible computer-readable medium of claim 13 wherein to modify a view of the displayed content includes scrolling through the displayed content, the function being to scroll through the displayed content by a pre-determined distance, the one or more sub-functions being to scroll through the displayed content by a distance determined in accordance with the first action and the second action.
